(19) Europäisches Patentamt
European Patent Office
Office européen des brevets

(11) **EP 0 711 729 B1**

(12) **EUROPÄISCHE PATENTSCHRIFT**

(45) Veröffentlichungstag und Bekanntmachung des Hinweises auf die Patenterteilung:
**06.05.1999 Patentblatt 1999/18**

(51) Int. Cl.$^6$: **C01B 7/04**

(21) Anmeldenummer: **95117255.0**

(22) Anmeldetag: **02.11.1995**

(54) **Verfahren zur Oxidation von Chlorwasserstoff**

Process for the oxidation of hydrogen chloride

Procédé d'oxydation de gaz chlorhydrique

(84) Benannte Vertragsstaaten:
**AT BE CH DE ES FR GB IT LI NL SE**

(30) Priorität: **14.11.1994 DE 4440646**

(43) Veröffentlichungstag der Anmeldung:
**15.05.1996 Patentblatt 1996/20**

(73) Patentinhaber: **BAYER AG**
**51368 Leverkusen (DE)**

(72) Erfinder:
• **Dummersdorf, Hans-Ulrich, Dr.**
**D-51399 Burscheid (DE)**
• **Waldmann, Helmut, Dr.**
**D-51373 Leverkusen (DE)**
• **Härle, Helmut, Dr.**
**D-51375 Leverkusen (DE)**
• **Minz, Franz-Rudolf, Dr.**
**D-41542 Dormagen (DE)**
• **Gestermann, Fritz, Dr.**
**D-51377 Leverkusen (DE)**

(56) Entgegenhaltungen:
WO-A-91/08980          DE-A- 2 813 506
US-A- 4 107 280        US-A- 4 537 835

**Beschreibung**

Die Patentanmeldung betrifft ein verbessertes Verfahren zur Herstellung von Chlor aus Chlorwasserstoff.

Bei der technischen Anwendung von Chlor zur Herstellung von Organika bilden sich große Mengen an Chlorwasserstoff.

So entstehen beispielsweise bei der Produktion der als Rohstoffbasis für Schaumstoffe oder Lacke dienenden Isocyanate zwischen 0,58 und 1,4 t Chlorwasserstoff pro t Endprodukte.

Bei der Chlorierung von Kohlenwasserstoffen wie z.B. Benzol oder Toluol entstehen ebenfalls große Mengen an Chlorwasserstoff, z.B. pro t Chlorbenzol 0,32 t Chlorwasserstoff.

Die Entsorgung des Chlorwasserstoffes kann technisch auf verschiedene Weise vorgenommen werden. So wird beispielsweise der technisch anfallende Chlorwasserstoff nach Überführung in wäßrige Salzsäure elektrolytisch in Chlor und Wasserstoff umgewandelt. Dieses Verfahren hat den Nachteil des hohen Bedarfs an elektrischer Energie, so benötigt man pro t zu elektrolysierenden Chlorwasserstoff etwa 1600 KWh. Ein weiterer Nachteil sind die hohen Investkosten für die Bereitstellung der elektrischen Energie, die Umspannung und Gleichrichtung und vor allem auch für die technischen Elektrolysezellen.

Aus diesem Grunde hat man schon verschiedentlich versucht, die Oxidation von Chlorwasserstoff mit Sauerstoff und Hilfe von Katalysatoren, die in den Lehrbüchern der anorganischen Chemie als "Deacon-Prozeß" bezeichnet wird, technisch anzuwenden (siehe "Lehrbuch der Anorganischen Chemie", Hollemann; Wiberg 40.-46. Auflage 1958, S.81, 455). Der Vorteil dieses "Deacon-Prozesses" besteht nun vornehmlich darin, daß für die Reaktion keine Energie von außen zugeführt wird. Nachteilig bei diesem Verfahren ist jedoch die Tatsache, daß die Umsetzung nur bis zu einem begrenzten Umsatz durchgeführt werden kann; man muß daher immer ein Gemisch aus Chlorwasserstoff, Chlor, Wasser und Sauerstoff auftrennen.

Es hat daher auch nicht an Versuchen gefehlt, diesen grundsätzlichen Nachteil des "Deacon-Prozesses" dadurch zu beheben, daß man ihn in zwei Stufen durchführt.

So hat man beispielsweise versucht, Katalysatorsysteme, beispielsweise Cu(I)-Salze (U.S. Patentschrift 4 119 705) oder Vanadiumoxide (WO 9 108 980 A1) zu verwenden, die in der Lage sind, Sauerstoff und Chlorwasserstoff aufzunehmen und unter anderen Versuchsbedingungen, z.B. bei 80 - 100°C höherer Temperatur, Chlor abzuspalten, wobei sich das ursprüngliche Katalysatorsystem wieder zurückbildet. Der Vorteil eines derartigen Konzeptes liegt darin, daß das bei der Umsetzung des Chlorwasserstoffs mit dem sauerstoffhaltigen Katalysator gebildete Reaktionswasser in der 1.Stufe abgetrennt werden kann und in der 2. Stufe hochangereichertes Chlor gebildet wird. Nachteilig bei diesem Konzept ist die Tatsache, daß das Katalysatorsystem zwischen den beiden Reaktionsstufen aufgeheizt bzw. abgekühlt und gegebenenfalls von einer Reaktionszone in die andere transportiert werden muß. In Verbindung mit der relativ geringen Sauerstoffabgabefähigkeit der verwendeten Katalysatorsysteme - so kann z.B. 1 t Vanadiumoxid-Schmelze etwa 0,01 t $O_2$ abgeben - bedeutet dies einen erheblichen technischen Aufwand, der einen großen Teil der Vorteile des "Deacon-Prozesses" aufzehrt.

Die bisher vorliegenden Konzepte zur technischen Realisierung der "Deacon-Prozesse" in einer einstufigen Reaktion sind unbefriedigend. Die von Deacon im 19. Jahrhundert vorgeschlagene Technik: Festbettreaktor mit einem Cu- enthaltenden Katalysator mit Luft als Oxidationsmittel liefert nur sehr verdünnte unreine Chlorströme, die allenfalls zum Herstellen von Chlorbleichlauge dienten (Johnstone, Chem. Eng. Progr. 44, 657, 1948). Eine erste sinnvolle Technik wurde im sogenannten "Oppauer-Verfahren" in den Jahren 1939-1944 entwickelt und in einer Pilotanlage technisch erprobt (DP 857 633, 1940/52). Dabei verwendete man beispielsweise ein Gemisch aus $FeCl_3$ und KCl, das als Schmelze bei Temperaturen von ca. 450°C als Reaktionsmedium und Katalysator diente.

Als Reaktor verwendete man einen mit keramischem Material ausgemauerten Turm, in dem die Schmelze sich befand und wo durch ein zentrales Begasungsrohr die Edukte HCl und Sauerstoff zugegeben wurden, was ein Zirkulieren der geschmolzenen Salze bewirkte. Von außerordentlichem Nachteil bei diesem Konzept ist insbesondere die sehr geringe Raumzeitausbeute (10-30 g Cl/l Reaktorvolumen/h), aufgrunddessen ein solcher Deacon-Prozeß z.B. gegenüber der HCl-Elektrolyse nicht entsprechend vorteilhaft betrieben werden kann .

Die schlechte Raumzeitausbeute zieht eine große Zahl weiterer Nachteile nach sich, wie große Standvolumina geschmolzener Salze, große Apparatevolumina mit hohen Investkosten und kostenintensiver Instandhaltung. Darüber hinaus lassen sich diese hohen Schmelzevolumina bezüglich der Temperaturhaltung, der Aufheizung und bei Abfahrvorgängen thermisch sehr schlecht beherrschen, was durch die thermische Trägheit der großen Reaktoren zusätzlich verstärkt wird.

Um diese Nachteile zu vermeiden hat man Vorschläge gemacht, die Reaktion bei geringerer Temperatur durchzuführen, z.B. bei Temperaturen unter 400°C.

Bei diesen Temperaturen besteht bereits die Möglichkeit der Feststoffabscheidung aus einer Cu-Salzschmelze, so daß man die Schmelze auf einem inerten Träger, z.B. $SiO_2$ oder $Al_2O_3$, zum Einsatz bringt, wobei die Reaktion in der Wirbelschicht durchgeführt wird (BP 908 022, Shell). Ein neuer Vorschlag verwendet Cr-enthaltende Katalysatoren auf inerten Trägern, wobei ebenfalls eine Temperatur unter 400°C gewählt wird (EP 184 413, Mitsui

2

Toatsu).

Bei allen diesen Vorschlägen mit Hilfe der Wirbelschicht-Technik, die Problematik des "Decaon-Prozesses" zu lösen, treten die Nachteile der unbefriedigenden Stabilität der Katalysatoren, die überdies noch aufgrund früher oder später eintretender Desaktivierung sehr aufwendig entsorgt werden müssen, in Erscheinung.

Ferner bereitet der beim Einsatz der Wirbelschicht-Technik nicht zu vermeidende Feinstaub (chromhaltig) große Probleme bei der Abtrennung aus den Reaktionsgemischen. Überdies bedeutet die wirbelnde Reaktionszone mit dem notwendigerweise harten Katalysator erhebliche Erosionsprobleme im Reaktor, die in Verbindung mit der Korrosion des Reaktionsgemisches erhebliche technische Probleme mit sich bringen, und die Verfügbarkeit einer technischen Anlage in hohem Maße beeinträchtigen. Dies ist besonders nachteilig, wenn der Deacon-Prozeß als HCl-Recycling-Anlage von kontinuierlich betriebenen Isocyanat-Anlagen mit Rückkopplung des erzeugten Chlors in diese Anlagen betrieben wird, was eine hohe Verfügbarkeit des Deacon-Verfahrens erfordert.

Ein weiterer Nachteil dieser üblichen Reaktionsbedingungen: ($T < 400°C$) besteht darin, daß eine befriedigende Reaktionsgeschwindigkeit bzw. daraus resultierende Raumzeitausbeute nur dann möglich ist, wenn ein relativ hoher Sauerstoffüberschuß angewendet wird, so daß die Aufarbeitung des Reaktionsgemisches nur mit Hilfe eines organischen Lösungsmittels, wie $CCl_4$ oder $S_2Cl_2$, technisch sinnvoll wird (DOS 1 467 142, Shell).

Es stellte sich nunmehr die Aufgabe, ein Verfahren zu finden, welches die an sich vorteilhafte Technik der Verwendung eines Systems geschmolzener Salze als Katalysator gegenüber der Wirbelschichttechnik für den Deacon-Prozeß nutzt, und dabei die Nachteile der Wirbelschichtverfahren vermeidet und ebenfalls den Nachteil der geringen Raumzeitausbeute und die anderen genannten Nachteile der konventionell bekannten Salzschmelzverfahren, z.B. des beschriebenen Oppauer-Verfahrens, vermeidet. Dabei soll mit einem geringen Sauerstoffüberschuß gegenüber stöchiometrischen Bedingungen gearbeitet werden.

Wir haben gefunden, daß man mit geschmolzenen Salzen, wie z.B. $Cu_2Cl_2$/KCl-Gemischen als Reaktionsmedium und Katalysator bei der Oxidation von HCl mit Sauerstoff als Edukte zu $Cl_2$ und Wasserdampf als Reaktionsgas den Deacon-Prozeß ohne die beschriebenen Nachteile und mit hoher Raumzeitausbeute betreiben kann, wenn man die Reaktion in einer Reaktionszone betreibt, wo die Salzschmelze als Reaktionsmedium und Katalysator im eingesetzten Eduktgas für den Deacon-Prozeß, d.h. in einer Mischung von HCl und Sauerstoff bzw. im Reaktionsgas dispergiert ist, so daß der Eduktgasstrom die kontinuierliche Phase und die als Katalysator und Reaktionsmedium eingesetzte Salzschmelze die dispergierte Phase darstellt. Diese erfindungsgemäße Verfahrenstechnik der Deacon-Reaktion ist durch eine geeignete Phasenkontaktform, z.B. in einem Rieselfilm zu realisieren, wobei als Phasenkontaktapparat ein Rieselfilm- oder Füllkörperreaktor eingesetzt werden kann. In der beschriebenen Reaktionszone vollzieht sich mit fortschreitender Reaktion ein kontinuierlicher Übergang von den Edukten zum Reaktionsgas.

Im Phasenkontaktapparat findet eine Vielfachaufteilung und Zerteilung der flüssigen Phase in der kontinuierlichen Gasphase statt, so daß eine große Kontaktoberfläche für den Stoffaustausch bereitgestellt wird. Diese Vielfachzerteilung der flüssigen Phase wird im Rahmen dieser Erfindung als Dispergierung bezeichnet.

Als Phasenkontaktapparate können Rieselfilmreaktoren, Füllkörperkolonnen, Düsenreaktoren und Sprühtürme verwendet werden, deren Wirkungsweise an sich bekannt ist und in der verfahrenstechnischen Literatur ausführlich beschrieben ist.

Zielgerichtete Untersuchungen ergaben, daß mit der erfindungsgemäßen Reaktionsführung die Raumzeitausbeute um ein Mehrfaches gesteigert werden kann (bis 3 000 g/l Reaktorvolumen x h Betriebsdauer). Das System $HCl/O_2/Cl_2/H_2O$ kann durch das erfindungsgemäße Verfahren bis an das thermodynamische Gleichgewicht herangeführt, d.h. maximale Ausbeute bei ultrakurzen Reaktionszeiten erzielt werden.

Vorzugsweise sollten bei Verwendung einer kombinierten $Cu_2Cl_2$/KCl-Salzschmelze (gegebenenfalls unter Beimischung geringer Anteile an Eisenchlorid) Kontaktzeiten zwischen der kontinuierlichen und der dispergierten Phase im Bereich von 0,1 - 4 s realisiert werden. Als geschmolzene Salzmischungen kommen weiterhin in Frage Cu(I)-Chlorid/KCl; Eisen(III)-Chlorid/KCl sowie als Promotoren der Reaktion(Co-Katalysatoren) Cr(III)-Chlorid und Chloride der Seltenen Erden, wie Neodym, Praseodym.

Die Folge der Anwendung des erfindungsgemäßen Verfahrens besteht in einer wesentlichen Verkleinerung der Reaktoren für den Deacon-Prozeß mit allen sich daraus ergebenden Vorteilen. So können die Investkosten erheblich gesenkt werden; es müssen lediglich kleine Schmelzevolumina gehandelt werden. Die thermische Trägheit der Reaktoren, mit denen das erfindungsgemäße Verfahren durchgeführt wird, ist gering.

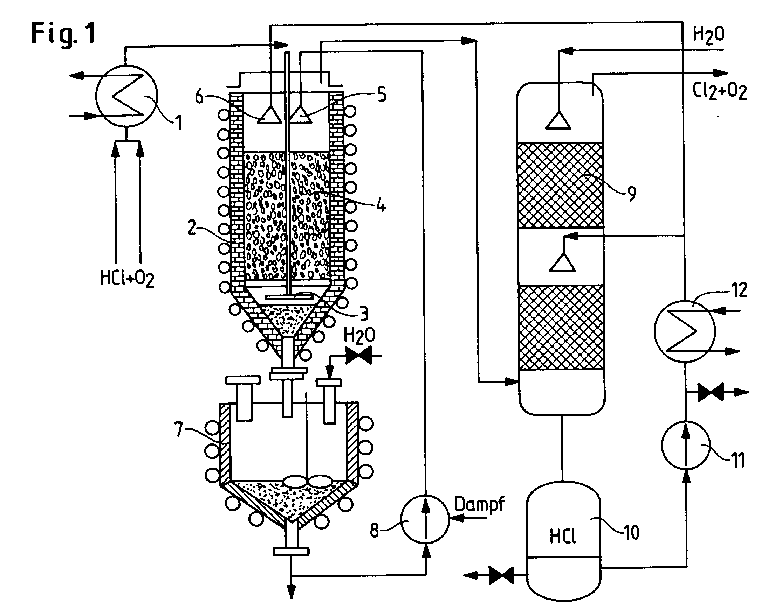

Eine vorteilhafte Form des erfindungsgemäßen Verfahrens zeigt Figur 1 :

Die Edukte zur Durchführung des Deacon-Prozesses HCl und $O_2$ werden in stöchiometrischer Zusammensetzung gemäß:

$$4\,HCl + O_2 \rightarrow 2\,Cl_2 + 2\,H_2O$$

zunächst einem Wärmetauscher 1 als gasförmiges Gemisch zur Vorwärmung auf eine Temperatur von ca. 200°C zur Gewährleistung einer autothermen Prozeßführung im Reaktor zugeführt. Als Reaktor kommt ein Füllkörperreaktor 2 zum Einsatz, der mit keramischen Material, z.B. Aluminiumoxidkeramik ausgekleidet und von außen elektrisch beheizt ist. Die gasförmigen vorgeheizten Edukte werden über einen Gasverteiler 3 im unteren Teil des Füllkörperreaktors 2 aufgegeben und über den Querschnitt des Füllkörperreaktors 2 verteilt. Oberhalb des Gasverteilers 3 befindet sich eine Schüttung 4 aus keramischen Füllkörpern und oberhalb dieser Schüttung 4 der Salzschmelzeverteiler 5 und der Salzsäureverteiler 6. Unterhalb des Füllkörperreaktors 2 befindet sich der Sumpfbehälter 7 und die Salzschmelzepumpe 8.

Das erfindungsgemäße Verfahren läuft nunmehr folgendermaßen ab:

Die im Wärmetauscher 1 vorgeheizten Eduktgase werden über den Gasverteiler 3 unterhalb der Schüttung 4 auf den Füllkörperreaktor 2 aufgegeben und durchströmen diesen von unten nach oben. Im Gegenstrom dazu wird auf den Kopf des Füllkörperreaktors 2 die etwa 450°C heiße $CuCl_2/KCl(FeCl_3)$-Salzschmelze aufgegeben und in der kontinuierlichen Gasphase mittels der Schüttung 4 dispergiert. Dabei wird die Salzschmelze, die aus dem Füllkörperreaktor 2 in den Sumpfbehälter 7 abläuft, mittels der Salzschmelzepumpe 8 auf den Kopf des Füllkörperreaktors 2 mittels des Salzschmelzeverteilers 5 aufgegeben. Die Reaktion von HCl und $O_2$ läuft in der Schüttung 4 ab, wo die Salzschmelze im Eduktgasstrom dispergiert ist. Hier lassen sich gegenüber dem bekannten Stand der Technik erhebliche Raumzeitausbeuten realisieren. Dabei kann das Stoffsystem bis an das thermodynamische Gleichgewicht herangeführt werden (bei 450°C; 1 bar Reaktionsdruck ist der Gleichgewichts-HCl-Umsatz etwa 70 - 75 %). Durch die erfindungsgemäße Dispergierung der Salzschmelze im Eduktgas wird der Reaktionsablauf wesentlich beschleunigt. Das sich am oder in der Nähe des thermodynamischen Gleichgewichts befindliche Reaktionsgemisch bestehend aus $Cl_2$, $H_2O$-Dampf und nicht umgesetztem $O_2$ bzw. HCl verläßt den Füllkörperreaktor 2 und wird in die Trennkolonne 9 geführt, wo zweistufig HCl aus dem Gasgemisch abgetrennt wird, und in Form weiterverwertbarer Salzsäure (20 %) im Behälter 10 aufgefangen wird. Die flüssige HCl wird über die Pumpe 11 und den Wärmetauscher 12, der der Abführung der Reaktionsenthalpie dient, auf die untere Stufe der Trennkolonne 9 aufgegeben. Die obere Stufe der Trennkolonne 9 dient der Feinreinigung des Reaktionsgases und wird mit Frischwasser beaufschlagt. Ein Teil der aus dem Behälter 10 für den Kreislauf der Trennkolonne 9 entnommenen HCl wird über den Salzsäureverteiler 6 auf den Kopf des Füllkörperreaktors 2 aufgegeben. Die Salzsäure kühlt hier das den Füllkörperreaktor 2 verlassende Reaktionsgasgemisch vor, damit eine Abscheidung der aufgrund ihres Dampfdruckes im Gas befindlichen Bestandteile der Salzschmelze bereits im Füllkörperreaktor 2 erfolgen kann, wobei die aufgegebene Salzsäure verdampft. Die entsprechende Desublimationsenthalpie der gasförmigen Salze sowie ein Teil der thermischen Enthalpie der Reaktionsgase wird dann zunächst über die Trennkolonne 9 und dann über die im Kreislauf umlaufende Salzsäure über den Wärmetauscher 12 indirekt aus dem Füllkörperreaktor 2 abgeführt. Die Trennkolonne 9 verläßt ein Gemisch aus dem Zielprodukt Chlor und nichtumgesetzten Sauerstoff, welcher dann anschließend durch eine Chlordestillation abgetrennt werden kann.

Anhand eines Prozeßbeispiels soll das erfindungsgemäße Verfahren erläutert werden:

In einer nach dem erfindungsgemäßen Verfahren arbeitenden Anlage werden 30 000 t/a HCl zu Chlor oxidiert. Dazu wird das Eduktgas, bestehend aus HCl und $O_2$ im stöchiometrischen Verhältnis einem Verdichter zugeführt, dort auf 2 bar komprimiert, in einem anschließenden Wärmetauscher auf 100°C vorgewärmt und anschließend einer aus keramischem Material bestehenden Füllkörperkolonne zugeführt. Die Füllkörperkolonne ist mit ebenfalls keramischen Füllkörpern gefüllt, besitzt einen Kolonnendurchmesser von 600 mm und einer aktive Höhe der Füllkörperschüttung von 2000 mm. Das Eduktgas wird von unten in die Füllkörperkolonne geführt und strömt entgegen der auf den Kolonnenkopf aufgegebenen Salzschmelze, die eine Temperatur von 450°C besitzt. An als Katalysator wirkenden Salzschmelze, bestehend aus Mischungen von KCl, CuCl und $FeCl_3$ findet nun die Oxidationsreaktion des HCl statt. Aufgrund der erfindungsgemäßen Phasenkontaktierung, die die Stoffübergangshemmung der HCl-Oxidation kompensiert, läßt sich die Deacon-Reaktion mit sehr hoher Raumzeitausbeute und damit kurzen Phasenkontaktzeiten durchführen. So wird im Füllkörperreaktor eine Raum-Zeitausbeute der Deacon-Reaktion von 13 t $HCl/h/m^3$ Reaktorvolumen erzielt, was um mindestens eine Größenordnung gegenüber den nach dem Stand der Technik erzielbaren Raum-Zeitausbeuten liegt. Dieser große Durchsatz läßt sich in einem außerordentlich kleinem Reaktor realisieren.

Vorteile der erfindungsgemäßen Lösung sind:

- hohe Raumzeitausbeute,
- kleine, verfahrenstechnisch leicht beherrschbare Katalysatorvolumina,
- geringer Sauerstoffüberschuß gegenüber stöchiometrischen Verhältnissen (quasistöchiometrische Verhältnisse),
- wesentlich verringerte Investkosten,
- geringe thermische Trägheit und Energieverluste,
- Reduzierung des Energieverbrauches durch Anfahr- und Aufheizprozesse,
- wesentlich verringerte Abfahrzeiten.

Das erfindungsgemäße Verfahren kann nicht nur zur Realisierung des Deacon-Prozesses eingesetzt werden, sondern auch bei der Realisierung anderer Prozesse, die als Reaktionsmedium und Katalysator Salzschmelzen verwenden, so z. B. bei der Umwandlung von Isobutan zu Isobuten.

**Patentansprüche**

1. Verfahren zur Durchführung des Deacon-Prozesses zur Oxidation von HCl mit Sauerstoff; zur Gewinnung von Chlor und Wasserdampf als Reaktionsgas, bei dem das Eduktgasgemisch HCl/Sauerstoff in Gegenwart einer Salzschmelze als Katalysator zur Reaktion gebracht wird, dadurch gekennzeichnet, daß das Eduktgasgemisch als kontinuierliche Phase durch eine Reaktionszone geführt wird und die Salzschmelze innerhalb dieser Reaktionszone in der kontinuierlichen Phase des Eduktgasgemischs und des dabei entstehenden Reaktionsgases dispergiert wird.

2. Verfahren gemäß Anspruch 1, dadurch gekennzeichnet, daß die Kontaktzeit der kontinuierlichen Edukt- bzw. Reaktionsgasphase mit der dispergierten Salzschmelze vorzugsweise zwischen 0,1 s und 4 s liegt.

3. Verfahren gemäß Anspruch 1 und/oder 2, dadurch gekennzeichnet, daß die Salzschmelze und die kontinuierliche Phase der Edukte bzw. des Reaktionsgases im Gegenstrom zueinander geführt werden

4. Verfahren nach Anspruch 1 - 3, dadurch gekennzeichnet, daß die Deacon-Reaktion in einem Phasenkontaktapparat durchgeführt wird, in dem die aus der Salzschmelze bestehende flüssige Phase in der aus der HCl-/$O_2$-Mischung und dem entstehenden Reaktionsgas $Cl_2$/$H_2O$-Dampf bestehenden gasförmigen Phase dispergiert wird

5. Verfahren nach Anspruch 1 - 4, dadurch gekennzeichnet, daß als Salzschmelze $Cu_2Cl_2$/KCl-Mischungen oder $CuCl_2$/KCl-Mischungen unter Beimischung von Eisenchlorid verwendet wird.

6. Verfahren nach Anspruch 1 - 5, dadurch gekennzeichnet, daß als Salzschmelze Cu(I)-Chlorid/KCl; Eisen(III)-Chlorid/KCl sowie als Promotoren der Reaktion (Co-Katalysatoren) Cr(III)-Chlorid und Chloride der Seltenen Erden, wie Neodym, Praseodym. verwendet werden.

**Claims**

1. A process for performing the Deacon process for oxidising HCl with oxygen, to obtain chlorine and water vapour as the product gas, in which the reactant gas mixture HCl/oxygen is reacted in the presence of a salt melt as catalyst, characterised in that the reactant gas mixture is fed as a continuous phase through a reaction zone and the salt melt is dispersed within this reaction zone in the continuous phase of the reactant gas mixture and the product gas being produced therefrom.

2. A process according to Claim 1, characterised in that the contact time for the continuous reactant and product gas phase and the dispersed salt melt is preferably between 0.1 and 4 seconds.

3. A process according to Claim 1 and/or 2, characterised in that the salt melt and the continuous phase of reactants and product gases are fed in counterflow to each other.

4. A process according to Claims 1 - 3, characterised in that the Deacon reaction is performed in a phase contact apparatus in which the liquid phase consisting of the salt melt is dispersed in the gaseous phase consisting of the HCl/$O_2$ mixture and the product gas $Cl_2$/$H_2O$ being produced.

5. A process according to Claims 1 - 4, characterised in that the salt melt used is a $Cu_2Cl_2$/KCl mixture or a $CuCl_2$/KCl mixture with added iron chloride.

6. A process according to Claim 1 - 5, characterised in that Cu(I) chloride/KCl; iron(III) chloride/KCl are used as the salt melt and that Cr(III) chloride and chlorides of the rare earths such as neodymium, praseodymium are used as promoters of the reaction (co-catalysts).

**Revendications**

1. Procédé en vue de la mise en oeuvre du procédé de Deacon d'oxydation d'HCl par l'oxygène, en vue de la récupération de chlore et de vapeur d'eau comme gaz de réaction, dans lequel le mélange de réactifs gazeux HCl/oxygène est amené à réagir en présence d'un sel fondu servant de catalyseur, caractérisé en ce que le mélange de réactifs gazeux est amené dans une zone de réaction sous la forme d'une phase continue et en ce que dans cette zone de réaction, le sel fondu est dispersé dans la phase continue du mélange de réactif gazeux et du gaz de réaction ainsi produit.

2. Procédé selon la revendication 1, caractérisé en ce que la durée du contact entre la phase continue de réactif ou de réaction avec le sel fondu dispersé est comprise de préférence entre 0,1 s et 4 s.

3. Procédé selon les revendications 1 et/ou 2, caractérisé en ce que le sel fondu et la phase continue de réactif ou de gaz de réaction sont apportés à contre-courant l'un de l'autre.

4. Procédé selon les revendications 1 à 3, caractérisé en ce que la réaction de Deacon est conduite dans un appareil de mise en contact des phases, dans lequel la phase liquide constituée du sel fondu est dispersée dans la phase gazeuse constituée du mélange de $HCl/O_2$ et du gaz de réaction $Cl_2$/vapeur de $H_2O$ ainsi produit.

5. Procédé selon les revendications 1 à 4, caractérisé en ce que comme sel fondu, on utilise des mélanges de $Cu_2Cl_2/KCl$ ou des mélanges de $CuCl_2/KCl$, auxquels est ajouté du chlorure de fer.

6. Procédé selon les revendications 1 à 5, caractérisé en ce que comme sel fondu, on utilise du chlorure de Cu(I)/KCl, du chlorure de fer(III)/KCl ainsi que, comme promoteurs de la réaction (co-catalyseurs), du chlorure de Cr(III) et des chlorures des terres rares tels que le néodyme et le praséodyme.

Fig. 1

EP 0 711 729 B1